# EUROPEAN PATENT SPECIFICATION

(11) **EP 0 559 627 B1**
(45) Date of publication and mention of the grant of the patent: **22.05.1996**
(21) Application number: 93850016.2
(22) Date of filing: 26.01.1993
(51) Int. Cl.: A61K 6/06, A61K 6/02, A61C 5/04

(54) **Method for the production of a chemically bounded ceramic product, a tool to be used for the carrying out of the method, and an interchangeable part on the tool**
Verfahren zur Herstellung eines chemisch gebundenen Keramikerzeugnisses, dafür gebrauchtes Werkzeug und austauschbares Teil an diesem Werkzeug
Procédé de production d'un produit céramique chimiquement lié, outil employé et partie interchangeable sur cet outil

(30) Priority: 03.02.1992 SE 9200303
(43) Date of publication of application: 08.09.1993
(73) Proprietor: DOXA CERTEX AKTIEBOLAG, S-754 26 Uppsala (SE)
(72) Inventor: Hermansson, Leif, S-754 26 Uppsala (SE)
(74) Representative: Hynell, Magnus

(56) References cited:
- WO-A-90/11066
- US-A- 4 392 827
- DATABASE WPI Section Ch, Week 8504, Derwent Publications Ltd., London, GB; Class A93, AN 85-022244 & JP-A-59 217 868 (YOSHINO RIKAKOGYO) 8 December 1984

## Description

### TECHNICAL FIELD

The present invention relates to the field of Chemically Bounded Ceramics (CBC) for the manufacturing of which chemical reactions, e.g. hydration processes, are used for the bounding operation at temperatures - normally below 100°C - which are so low that conventional sintering can not be applied. More particularly the invention relates to a method for the manufacturing of a chemically bounded ceramic by reaction between one or several pulverulent binding agents and a liquid which reacts with these binding agents, wherein the ceramic product also can include one or several aggregates, which essentially do not take part in the chemical reactions. The method of the invention can be applied in the first place for the manufacturing of permanent tooth filling materials, but is generally useful for the manufacturing of a ceramic in a mould cavity, e.g. in a tooth cavity.

### BACKGROUND ART

Materials intended for permanent tooth fillings must satisfy a number of demands. Some of these demands may be difficult to satisfy at the same time. The same combination of requirements often are valid also for implant materials. Among these requirements for example the following can be mentioned.
- The material shall have adequate mechanical features, in the first place a good strength and, as far as dental materials are concerned, also a good wear resistance.
- It shall be biological compatible, a feature which is particularly important for implant materials.
- It shall have an adequate corrosion resistance.
- The material shall have a good long term stability, which implies that it must neither shrink nor expand because of ageing, a feature which is of extreme importance for tooth filling materials.
- The starting material shall have a good workability and provide a fast but not too fast initial hardening.
- The material must not be toxic or generate toxic secondary products.

An example of a material which can be defined as a CBC-material is that "cement" which is used in the field of dentistry and which is based mainly on zink oxide and orthophosphoric acid. This cement has been used for temporary fillings, fastening of crowns, etc., but its strength has so far been unsatisfactory and this cement can therefor not be used for permanent fillings.

Another type of material used for dental applications are the so called glass polyalkeonate cements and similar materials. The Swedish Patent 381 808 and the European Patent Publications No. 0 024 056 and 0 115 058 exemplify this type of material.

It has also been suggested to use hydraulic cement materials as dental fillings. Thus, the US Patent No. 4 689 080 describes the use of calcium aluminate as a binding agent for dental applications. Also a material which is described in the International Patent Application No. WO90/11066 is based on the use of one or several pulverulent binding agents, and a liquid which reacts with these binding agents, which may consist of calcium aluminate or other hydrations phases, such as silicates and phosphates, while said liquid consists of water. In order to achieve a sufficient strength, a powder body is formed consisting of the said binding agent and possible aggregate, wherein the powder body without addition of the said liquid is compacted by subjecting the powder body to an external pressure prior to soaking (impregnating) the green body with said liquid, the external pressure being so high and the temperature being so low that there is achieved a well united green body without any sintering reactions occurring during the compacting, in which green body the filling density is increased to at least 1.3 times the initial filling density. The compaction is carried out through mechanical pressing, preferably cold isostatic pressing. This green body thereafter is impregnated with the liquid which is soaked in by capillary forces acting in the body. The spontaneous soaking in by means of the capillary forces also can be augmented by shaking or vibrating the green body or subjecting it to a similar treatment in the liquid. Through the soaking, the filling density of the green body is increased to at least 1.5 and preferably to at least 1.8 times the initial filling density. By this technique it has been possible to achieve a material which potentially can satisfy all the above mentioned features. However, clinical tests have shown that in some cases one of the requirements has not been satisfied, namely the demand for long term stability. Thus after an extended period of time there has been registered an expansion in the ceramic. It is true that the expansion degree is very small but for tooth fillings it is nevertheless hazardous since it may cause fatal tooth fractures. Probably not the entire pore system in the green body is filled with liquid in connection with the soaking of the green body, in spite of all stimulating measurements, which is believed to cause the expansion. The incomplete filling of the pore system in turn may be due to an initial reaction between liquid and binding agent in surface layers or in deeper parts of the material which may prevent continued diffusion of liquid to regions of the powder body which have been isolated because of the said reactions. This has to the result that in these isolated regions of the product there may exist non-hydrated calcium aluminates, when the product is based on that type of binding agent. If water or corresponding liquid later will diffuse into the non-reacted regions, which may occur after several years, a continued hydrating or corresponding reaction will take place, which will cause an expansion of the material and in fatal cases crack the product.

### BRIEF DISCLOSURE OF THE INVENTION

It is an object of the invention to provide an improved chemically bounded ceramic. As starting material may be used the same raw materials as according to said WO90/11066, therefore also the same chemical reactions which take place in the product in connection with the stiffening will be the same. The difference lies in the practical performance which aims at eliminating all risk that all parts of the product are not completely wetted. Thus, according to the improved method of the invention, there is not made any green body of dry powder in order to achieve a high initial dense packing degree. Instead the said binding agent and possible aggregate materials are blunged in the said liquid, so that all grains of the powder are effectively brought to contact (be wetted by) the liquid prior to initial compaction. The slurry or slip thereafter is drained so that the main part of surplus reacting liquid is removed, whereafter an amount of the mixture is applied in a mould cavity, i.e. in a tooth cavity. The mixture which is applied in the cavity consists of powder and reacting liquid which still exist to some excess in the mixture, i.e. to an extent larger than is required for the transformation of all pulverulent binding agent through chemical reaction. Thereafter additional liquid is removed in situ in the mould cavity before the product is hardened through reaction between the said binding agent and the remaining liquid. More particularly, the said additional liquid is preferably removed in situ by means of a tool - a compaction tool - with a part acting on the moist pulverulent material, said part consisting of a hard, porous material, into which said additional liquid is sucked in at the same time as the pulverulent material is compacted in the mould cavity to reach a compaction degree exceeding 60 volume-% solid phase, preferably more than 62 %. Suitably there is used a compaction tool, which per se is part of this invention, where the pores in the said porous material has a mean pore size which is smaller than the mean grain size of the powder mixture to prevent the powder grains in the powder mixture to enter into the pores in the tool.

Suitably the tip portion of the tool, which is brought into contact with the powder-liquid mixture, consists of an exchangeable member of the tool. This member can consist of a porous ceramic material, by a porous metallic material, or by a porous polymeric material. Also combinations of these materials are per se conceivable.

The compaction tool can have the same shape as a conventional so called stopper of the kind which is used by dentists, when it is the matter of making tooth fillings, wherein the stopper head or tip portion consists of or comprises or exhibits a porous stamp which sucks up excess liquid from the predrained powder/liquid mass which successively is filled into the tooth cavity or other cavity at the same time as the material is pressed together to the desired compaction degree. The risk for making the mass deplete of liquid is minimal since it is always the smallest pores/channels which are emptied last in connection with capillary action. If, however, there would nevertheless be a deficiency of liquid, it is easy to adjust the moisture content by remoistening and a repeated press suction. After completed compaction more reacting liquid, i.e. water or corresponding, may be supplied. The use of a porous stopper thus implies a combined suction and pressure action which is an efficient method of achieving an optimal compaction at the same time as the compacted mass is not depleted of reacting liquid.

Through the method of the invention there is achieved a compaction degree of at least 60 volume-%, preferably at least 62 volume-%, suitably 62-67 volume-% prior to reaction between liquid and binding agent and in the finished reacted product a very low degree of porosity, which means less than 5 volume-% and preferably less than 2 volume-% porosity as measured by penetration of water according to Archimedes' principle.

Further there is achieved a complete or almost complete transformation of the binding agent or the binding agents, i.e. a complete reaction between the binding agent or binding agents and the reacting liquid, which is an unconditional demand.

According to a first preferred embodiment of the invention, said binding agent consists of one or several hydraulic binding agents, the hydration phases of which belong to the group of compounds, which consists of aluminates, silicates, and phosphates, the liquid being a hydration liquid, consisting of water and possibly substances dissolved in the water. The preferred aluminate is calcium aluminate, which can be present in various proportions between CaO and Al₂O₃. The preferred silicate is calcium silicate with varying proportions between CaO and SiO₂, which is the main component of Portland cement, which however contains also other components, e.g. Al₂O₃. Other phases are e.g. 3 CaOxAl₂O₃ and 4 CaOxAl₂O₃ and 4 CaOxAl₂O₃xFe₂O₃.

Combinations of silicates and aluminates having a higher portion of aluminate than in an ordinary Portland cement are also useful. Phosphates, which are useful as binding agents in this connection, are e.g. calcium phosphate and zinc phosphate.

The above mentioned substances may exist as natural minerals or be produced synthetically. Irrespective of their origin they must be preliminarily treated according to conventional technique, which however does not constitute part of the present invention. As a result of this treatment a powder is obtained, in which the pulverulent grains have a size ranging from a submicron-size up to a maximum size of 100 µm in the largest extension of the grains. An ordinary medium grain size can be as high as about 15 µm, i.e. 50 percent by weight of the grains have a size larger than about 15 µm. Preferably the main part of the grains have a size between 10 and 30 µm. The shape is very irregular. It is true that the invention has been developed for hydration materials, e.g. aluminates, silicates, and phosphates, but the invention's principal features probably can be utilized also in other systems. In the dental field, and also in other fields, the invention can e.g. be utilized in case the binding agents mainly are one or several oxides, e.g. zinc oxide, while said liquid is one or several acids, e.g. a phosphorus-based acid, preferably and mainly orthophosphoric acid.

An additional feasible application field among several others is the production of a so called glass polyalkeonate cement, the binding agent possibly consisting of a mixture of a glass powder and a freeze-dehydrated acid according to a technique known per se, while the liquid can be water.

Besides the binding agent and the liquid, which subsequent to the reaction with the binding agent form a solid phase, it is possible, as is generally known, to add an aggregate material, i.e. a material which does not participate in the chemical reactions between the binding agent and the liquid but which is present as a solid phase in the finished, solid final product. For certain application fields such aggregate materials can be reinforcements of various types, e.g. fibers of metals, carbon, glass or organic materials etc. The reinforcement advantageously can be obtained by introducing long crystals, so called whiskers, e.g. of SiC, Si₃N₄ and/or Al₂O₃.

Also, for dental applications or as a prosthesis material for general surgical applications the CBC-material according to the invention can include aggregate materials, provided they meet certain requirements. Thus, they must not be toxic, they must be biocompatible, must not cause irritations in the oral cavity in the case of dental applications, must not corrode etc. A small amount of boron nitride can e.g. be added to be used as a solid lubricant in connection with the compaction of the dry pulverulent material, preferably an amount of 5-15 percent by volume of the dry substance previous to the compaction and the impregnation with said liquid.

In case the binding agent is one or several hydration materials, the aggregate material can also be e.g. hydroxylapatite or solid solutions thereof and/or oxides of one or several of titanium, zirconium, zinc and aluminum. It is particularly advantageous to use as aggregates outwardly projecting, needle-shaped crystals, preferably of titanium dioxide, which are biocompatible and chemically inert in all the systems considered here, i.e. also to such hydration liquids as phosphoric acid etc. Said titanium dioxide aggregate suitably comprises three-dimensionally oriented and star-shaped, needle-shaped crystals, the thickness of which can be a few tenths of a micrometer but the length of which normally is several times larger. These crystals are agglomerated to larger particles or agglomerates having a size of several micrometers. The reinforcement effect of the agglomerates in the hardened product is due to the nature of the agglomerates. Thus, the bond between the setting phase and the agglomerates of titanium dioxide crystals is improved and strengthened when the agglomerates are etched, e.g. in 0.5-10 M, particularly 1-3 M, sodium hydroxide or in another etch solution, e.g. a mineral acid such as phosphoric acid.

According to the invention a superplasticizer can also be admixed in a dry condition or by means of a water-free solution in the sludge or slip before this is dewatered. A suitable superplasticizer is e.g. 79 % hydrolysed polyvinyl acetate.

The aggregate particles or the agglomerates of aggregate particles preferably have a particle size of 0.5-10 µm. It is particularly advantageous to let such particles have a mean particle size, which is considerably smaller than the mean grain size of the binding agent, because then a somewhat higher initial filling density can be obtained. The amount of aggregate material is preferably 3-25 percent by weight of the finished CBC-material or 4-30 percent by volume of the mixture of the binding agent powder and the aggregate material prior to sludging the powder mixture.

In a special embodiment of the invention a fine-grained binding agent phase and a somewhat coarser aggregate material phase in the powder body are used instead. According to this embodiment the main portion of the powder grains in the binding agent phase can have grain sizes of 1-20 µm, while the main portion of the grains of the aggregate material phase have a size distribution of 5-50 µm. This choice of particle size distribution between the binding agent phase and the aggregate material phase will facilitate an almost total transformation or "consumption" of the binding agent, i.e. a reaction between the binding agent phase and the liquid. Consequently, the final CBC-product will be composed of comparatively large aggregate material particles, surrounded by completely hydrated areas and areas reacted in a corresponding way, respectively.

Further characteristic features and aspects of the invention are apparent from the claims and the following description of some conceivable embodiments of a tool intended to be used in the carrying out of the method of the invention.

### BRIEF DESCRIPTION OF DRAWINGS

In the following, reference will be made to some conceivable embodiments of a tool intended to be used for the carrying out ot the method, wherein reference will be made to the accompanying drawings, in which
- Fig. 1: illustrates a first embodiment of the tool, a so called stopper to be used for the compaction and final dewatering of tooth fillings;
- Fig. 2: shows the encircled tool head at a larger scale and in section;
- Fig. 3: schematically at a still larger scale shows a surface portion of the active part of the stopper for the compaction and final dewatering, which part is encircled in Fig. 2; and
- Fig. 4: shows another embodiment of the tool head.

### DESCRIPTION OF SOME POSSIBLE EMBODIMENTS

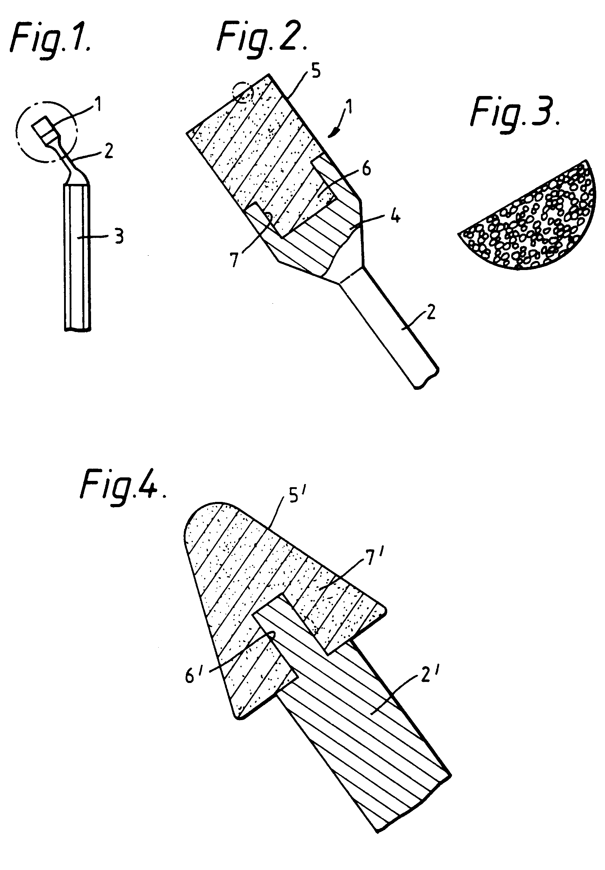

The tool shown in Fig. 1 has an over all design which can be identical to that of conventional stoppers for making tooth fillings. The tool has a head 1, a neck 2 and a holder 3. The holder 3, the neck 2 and a shoulder 4 conventionally consists of steel. The characteristic feature of the tool is the tip portion 5 which consists of a porous but hard material. As above mentioned it can consist of a porous ceramic, a porous metallic, or a porous polymeric material. Also combinations of some of these materials are possible. Whatever material that it used, it shall exhibit continous pores having a size (diameter, i.e. size in the cross direction) which is so small that liquid can be sucked into the material through an efficient capillary action. Further the pores should be smaller than the grains in the pulverulent material to be compacted and dewatered by means of the stopper so that grains will not enter into and block the pores in the material in the tip portion 5. A ceramic material consisting of a so called reaction bounded silicon nitride is recommended as a tip portion material.

According to the embodiment shown in Fig. 2, the tip portion 5 consists of a detachable and exchangeable cylindrical member which can be secured in a recess 7 in the neck portion 4 by means of a male portion 6.

Fig. 4 illustrates another embodiment in which the interchangeable porous member 5' is not cylindrical but instead substantially conical. It is in this case secured to the neck portion 2' by means of a pin 7' on neck portion 2' and a corresponding recess 6' in the tip member 5'.

The detachable member 5 and 5', respectively, can when it has been saturated with liquid from the mass which is being compacted, be regenerated by heating in an oven or by a burner. The geometrical design naturally can be varied within wide ranges. The shown embodiments thus only are examples and do not limit the claimed patent protection.

## Claims

1. Method for the manufacturing of a chemically bounded ceramic by reaction between one or several pulverulent binding agents and a liquid which reacts with these binding agents, wherein the ceramic product also can include one or several aggregates, which essentially do not take part in the chemical reactions, **characterized** in that a quantity of pulverulent material consisting of said one or several pulverulent binding agents and possibly said one or several aggregate material are blunged in said liquid, so that all grains of the powder are effectively brought to contact the liquid, that this slurry or slip thereafter is drained so that the main part of surplus reacting liquid is removed, that an amount of the mixture of powder and reacting liquid still existing to some extent in the mixture, i.e. to an extent larger than is required for the transformation of all pulverulent binding agent through chemical reaction, is applied in a mould cavity, i.e. in a tooth cavity, and that additional liquid is removed in situ in the mould cavity before the product is hardened through reaction between the said binding agent and the remaining liquid.

2. Method according to claim 1, **characterized** in that said additional liquid is removed in situ by means of a compaction tool with a part acting on the moist pulverulent material, said part consisting of a hard, porous material, into which said additional liquid is sucked in at the same time as the pulverulent material is compacted in the mould cavity.

3. Method according to claim 1 or 2, **characterized** in that said slurry or slip after preconcentration is further concentrated in terms of its content of solid material to more than 55 volume-%, preferably to more than 60 volume-% and suitably to between 62 and 67 volume-%.

4. Method according to any of claims 1-3, **characterized** in that the preconcentration is carried out through centrifuging and/or dewatering in/or on a porous mould.

5. Method according to any of claims 1-4, **characterized** in that a compaction tool is used in which the pores in said porous material has a mean pore size which is smaller than the mean grain size of the powder mixture.

6. Tool for the compaction and for the removing of liquid from a moist, pulverulent tooth filling material in situ in a tooth cavity, **characterized** in that the part (5) of the tool working on the tooth filling material consists of a solid porous material.

7. Tool according to the claim 6, **characterized** in that the working part consists of a porous ceramic material.

8. Tool according to claim 6, **characterized** in that the working part consists of a porous metallic material.

9. Tool according to claim 6, **characterized** in that the working part consists of a porous polymeric material.

10. Tool according to any of claims 6-9, **characterized** in that the pores in the porous material have a mean pore diameter which is smaller than the mean grain size of the tooth filling material.

11. Tool according to any of claims 6-10, **characterized** in that the porous part is exchangeable.

12. Exchangeable member of a tool for the compaction and for the removing of liquid from a moist pulverulent tooth filling material in situ in a tooth cavity **characterized** in that it consists of a solid, porous material.

13. Exchangeable member according to claim 12, **characterized** in that it consists of a porous ceramic material.

14. Exchangeable member according to claim 12, **characterized** in that it consists of a porous metallic material.

15. Exchangeable member according to claim 12, **characterized** in that it consists of a porous polymeric material.

16. Exchangeable member according to any of claims 12-15, **characterized** in that the pores in the porous material have a mean pore diameter which is smaller than the mean grain size of the tooth filling material.

## Patentansprüche

1. Verfahren zum Herstellen einer chemisch gebundenen Keramik durch Reaktion zwischen einem oder mehreren pulverisierten Bindemitteln und einer Flüssigkeit, welche mit diesen Bindemitteln reagiert, wobei das keramische Erzeugnis ferner ein oder mehrere Zuschlagstoffe aufweisen kann, welche im wesentlichen nicht an der chemischen Reaktion teilnehmen,
dadurch gekennzeichnet,
daß eine Menge von pulverisiertem Stoff, welcher aus einem oder mehreren pulverisierten Bindemitteln besteht, und ggfs. der eine oder die mehreren Zuschlagstoffe in die Flüssigkeit gerührt werden, so daß alle Körner des Pulvers tatsächlich in Berührung mit der Flüssigkeit gebracht werden, daR diese Aufschlämmung oder dieser Schlick anschließend entwässert wird, so daß der Hauptanteil der überschüssigen Reaktionsflüssigkeit entfernt wird, daß eine Menge der Mischung des Pulvers und der Reaktionsflüssigkeit, welche bis zu einem gewissen Grade noch in der Mischung vorhanden ist, d.h., bis zu einem Grad, welcher höher ist als er für die Umwandlung von dem gesamten pulverförmigen Bindemittel durch die chemische Reaktion erforderlich ist, in einen Formraum eingegossen wird, d.h., in einen Zahnhohlraum, und daß zusätzliche Flüssigkeit an Ort und Stelle im Formraum entfernt wird, bevor das Erzeugnis durch die Reaktion zwischen dem Bindemittel und der verbleibenden Flüssigkeit ausgehärtet ist.

2. Verfahren nach Anspruch 1, dadurch gekennzeichnet, daß die zusätzliche Flüssigkeit an Ort und Stelle durch ein Verdichtwerkzeug mit einem Teil, welches auf den feuchten pulverisierten Stoff wirkt, entfernt wird, wobei dieses Teil aus einem harten, porösen Werkstoff besteht, welches die zusätzliche Flüssigkeit zur gleichen Zeit aufsaugt, wenn der pulverisierte Stoff in dem Formraum verdichtet wird.

3. Verfahren nach Anspruch 1 oder 2, dadurch gekennzeichnet, daß die Aufschlämmung oder der Schlick nach einer Vorentwässerung ferner hinsichtlich ihres Feststoffgehaltes auf mehr als 55 Volumen%, bevorzugt mehr als 60 Volumen% und geeigneterweise zwischen 62 und 67 Volumen% konzentriert wird.

4. Verfahren nach einem der Ansprüche 1 bis 3, dadurch gekennzeichnet, daß die Vorentwässerung durch Zentrifugieren und/oder Entwässern in/oder auf einer porösen Form durchgeführt wird.

5. Verfahren nach einem der Ansprüche 1 bis 4, dadurch gekennzeichnet, daß ein Verdichtwerkzeug verwendet wird, bei welchem die Poren des porösen Werkstoffes eine durchschnittliche Porengröße aufweisen, die kleiner als die durchschnittliche Korngröße der Pulvermischung ist.

6. Werkzeug zum Verdichten von und zum Entfernen von Flüssigkeit aus einem feuchten, pulverisierten Zahnfüllwerkstoff direkt in einem Zahnhohlraum, dadurch gekennzeichnet, daß der Teil (5) des Werkzeuges, welcher mit Zahnfüllwerkstoff zusammenwirkt, aus einem festen porösen Werkstoff besteht.

7. Werkzeug nach Anspruch 6 dadurch gekennzeichnet, daß das wirksame Teil aus einem porösen keramischen Stoff besteht.

8. Werkzeug nach Anspruch 6, dadurch gekennzeichnet, daß das wirksame Teil aus einem porösen metallischen Stoff besteht.

9. Werkzeug nach Anspruch 6 dadurch gekennzeichnet, daß das wirksame Teil aus einem porösen polymeren Stoff besteht.

10. Werkzeug nach einem der Ansprüche 6 bis 9, dadurch gekennzeichnet, daß die Poren in dem porösen Werkstoff einen durchschnittlichen Porendurchmesser aufweisen, welcher kleiner als die durchschnittliche Korngröße des Zahnfüllwerkstoffes ist.

11. Werkzeug nach einem der Ansprüche 6 bis 10 dadurch gekennzeichnet, daß das poröse Teil austauschbar ist.

12. Austauschbares Teil eines Werkzeuges zum Verdichten von und zum Entziehen von Flüssigkeit aus einem feuchten pulverisierten Zahnfüllwerkstoff direkt in einem Zahnhohlraum, dadurch gekennzeichnet, daß es aus einem festen porösen Werkstoff besteht.

13. Austauschbares Teil nach Anspruch 12, dadurch gekennzeichnet, daß es aus einem porösen keramischen Werkstoff besteht.

14. Austauschbares Teil nach Anspruch 12, dadurch gekennzeichnet, daß es aus einem porösen metallischen Werkstoff besteht.

15. Austauschbares Teil nach Anspruch 12, dadurch gekennzeichnet, daß es aus einem porösen polymeren Werkstoff besteht.

16. Austauschbares Teil nach einem der Ansprüche 12 bis 15, dadurch gekennzeichnet, daß die Poren in dem porösen Werkstoff einen durchschnittlichen Porendurchmesser aufweisen, welcher kleiner als die durchschnittliche Korngröße des Zahnfüllwerkstoffes ist.

## Revendications

1. Procédé pour la fabrication d'une céramique liée chimiquement par réaction entre un ou plusieurs agents de liaison pulvérulents et un liquide qui réagit avec ces agents de liaison, le produit de céramique pouvant également inclure un ou plusieurs agrégats ne prenant pratiquement pas part aux réactions chimiques, caractérisé en ce qu'une quantité de matière pulvérulente constituée desdits un ou plusieurs agents de liaison pulvérulents et éventuellement desdits un ou plusieurs matériaux de type agrégat sont mélangés audit liquide de façon à ce que les grains de la poudre soient amenés au contact du liquide de façon efficace, en ce que la plus grande partie ou le surplus de liquide réactif est éliminé par la suite par drainage de la suspension ou du fluide, qu'en ce qu'une quantité du mélange de la poudre et du liquide réactif existant encore en une certaine proportion dans le mélange, c'est-à-dire en une proportion supérieure à celle nécessaire pour la transformation de la totalité de l'agent de liaison pulvérulent par réaction chimique, est appliquée dans la cavité d'un moule c'est-à-dire la cavité d'une dent, et en ce que le liquide en excès est éliminé in situ de la cavité du moule avant que le produit ne soit durci par réaction entre ledit agent de liaison et le liquide restant.

2. Procédé selon la revendication 1, caractérisé en ce que ledit liquide en excès est éliminé in situ au moyen d'un outil de compactage dont une partie agit sur le matériau pulvérulent humide, ladite partie étant constituée d'un matériau poreux dur, dans lequel ledit liquide en excès est aspiré alors que dans le même temps le matériau pulvérulent est tassé dans la cavité du moule.

3. Procédé selon la revendication 1 ou 2, caractérisé en ce qu'après une pré-concentration ladite suspension ou ledit fluide est concentré de nouveau eu égard à sa teneur en matériau solide à plus de 55 % en volume, de préférence à plus de 60 % en volume et de façon appropriée entre 62 et 67 % en volume.

4. Procédé selon l'une quelconque des revendications 1-3, caractérisé en ce que la pré-concentration est réalisée par centrifugation et/ou égouttage mécanique dans/sur un moule poreux.

5. Procédé selon l'une quelconque des revendications 1 à 4, caractérisé en ce que l'outil de compactage qui est utilisé présente des pores dans ledit matériau poreux d'une taille moyenne inférieure à celle de la taille moyenne des grains du mélange en poudre.

6. Outil de compactage pour l'élimination in situ du liquide à partir du matériau de remplissage dentaire pulvérulent, humide, dans une cavité dentaire, caractérisé en ce que la partie (5) de l'outil opérant sur le matériau de remplissage dentaire est constitué d'un matériau poreux solide.

7. Outil selon la revendication 6, caractérisé en ce que la partie utile est constituée d'un matériau céramique poreux.

8. Outil selon la revendication 6, caractérisé en ce que la partie utile est constituée d'un matériau métallique poreux.

9. Outil selon la revendication 6, caractérisé en ce que la partie utile est constituée d'un matériau polymère poreux.

10. Outil selon l'une quelconque des revendications 6 à 9, caractérisé en ce que les pores dans le matériau poreux ont un diamètre moyen de pore qui est inférieur à la taille moyenne des grains du matériau de remplissage dentaire.

11. Outil selon l'une quelconque des revendications 6 à 10, caractérisé en ce que la partie poreuse est échangeable.

12. Elément échangeable pour un outil de compactage destiné à l'élimination in situ de liquide à partir d'un matériau de remplissage dentaire pulvérulent, humide, dans une cavité dentaire, caractérisé en ce qu'il est constitué d'un matériau poreux solide.

13. Elément échangeable selon la revendication 12, caractérisé en ce qu'il est constitué d'un matériau céramique poreux.

14. Elément échangeable selon la revendication 12, caractérisé en ce qu'il est constitué d'un matériau métallique poreux.

15. Elément échangeable selon la revendication 12, caractérisé en ce qu'il est constitué d'un matériau polymère poreux.

16. Elément échangeable selon l'une quelconque des revendications 12 à 15, caractérisé en ce que les pores du matériau poreux ont un diamètre de pore moyen inférieur à la taille moyenne des grains du matériau de remplissage dentaire.
